# EUROPEAN PATENT APPLICATION

(11) **EP 1 790 694 A1**
(43) Date of publication of application: **30.05.2007**
(21) Application number: 05025912.6
(22) Date of filing: 28.11.2005
(51) Int. Cl.: C08L 101/00, C08J 5/00, B29C 61/00

(54) **Blends of shape memory polymers with thermoplastic polymers**

(71) Applicant: Mnemoscience GmbH, 52531 Uebach-Palenberg (DE)
(72) Inventor: Lendlein, Andreas, Dr., 14167 Berlin (DE); Hasson, Tareq Ali Abdulla, 52062 Aachen (DE); Jiang, Hongyan, 52062 Aachen (DE); Kratz, Karl, 10115 Berlin (DE); Simon, Peter F.W., 21465 Reinbek (DE); Schulte, Jürgen, 52062 Aachen (DE); Kelch, Steffen, 14167 Berlin (DE); Schnitter, Birgit, Dr., 89077 Ulm (DE)
(74) Representative: Grünecker, Kinkeldey, Stockmair & Schwanhäusser Anwaltssozietät

(57) **Abstract**

The present invention concerns blends comprising at least one shape memory polymer and at least one thermoplastic polymer, wherein this thermoplastic polymer does not show shape memory properties. The present invention furthermore concerns methods for preparing such blends and the use of these blends in various applications, including additional products, household equipment etc.

## Description

The present invention concerns blends comprising at least one shape memory polymer and at least one thermoplastic polymer, wherein this thermoplastic polymer does not show shape memory properties. The present invention furthermore concerns methods for preparing such blends and the use of these blends in various applications, including additional products, household equipment etc.

Shape memory materials are an interesting class of materials which have been investigated in the recent years. Shape memory functionality is the ability of a material to temporarily fix a second shape after an elastic deformation and only recover its original permanent shape if an external stimulus is applied. While this effect is one-way, reversible changes induced by cooling and heating are a two-way effect. Such a phenomenon is based on a structural phase transformation within the material. The advantageous and intriguing properties of these materials are in particular the possibility to initiate a desired change in shape by an appropriate external stimulus, so that an original shape, after deformation, is re-established, and the possibility to deform and program these materials so that highly specific configurations and shape changes can be obtained. The deformed shape is often called the temporary shape in the art. The phenomenon is a functionality and not an inherent material property. The effect results from a combination of polymer structure and a specific functionalization process.

The first materials known to provide this functionality were shape memory metal alloys. In the recent past shape memory polymers have been developed in order to widen the fields of application for shape memory materials. Typical shape memory polymers are for example phase segregated linear block copolymers having a hard segment and a switching segment. The hard segment is typically crystalline, with a defined melting point, while the switching segment is typically amorphous, with a defined glass transition temperature. In other embodiments, shape memory polymers may, however, possess a different structure. Conventional shape memory polymers generally are segmented polyurethanes, although also other polymer structures are possible. Important representatives of these types of materials are disclosed in the international publications WO 99/42147 and WO 99/42528, the content of which is incorporated herewith by reference.

The phenomenon of shape memory property is generally defined as a bulk property of the material as such, after suitable programming steps (deformation and fixation in the deformed state). One important drawback of such conventional shape memory polymers, however, is the fact that such polymers are prepared by laborious chemical synthesis involving relatively expensive starting materials. In particular, the shape memory polymers based on ester segments, linked by urethane moieties are disadvantageous in that high priced starting materials have to be reacted with further compounds which require specific measures during the reaction, in particular the isocyanates required for the preparation of the urethane units. Furthermore new polymers have to be synthesized in every case to achieve a requested property.

A further drawback of some conventional shape memory polymers is, that they are dissatisfactory for high temperature applications.

The present invention accordingly aims at overcoming the above-mentioned drawbacks and desires to provide a material having shape memory properties not associated with all or part of the drawbacks identified above.

### Brief description of the invention

The above object has been solved with the blend as defined in claim 1. Preferred embodiments are defined in claims 2 to 10. The present invention furthermore provides methods for preparing such blends as identified in claims 11 to 13 and appropriate uses of these materials as identified in claims 14 and 15. Further embodiments are disclosed in the specification.

### Detailed description of the present invention

The present invention provides a blend having shape memory properties, wherein this blend is characterized in that it comprises at least one shape memory polymer blended with at least one thermoplastic polymer wherein this thermoplastic polymer is not a shape memory polymer.

The blends in accordance with the present invention, while still showing satisfactory shape memory properties, do not require the presence of high amounts of expensive shape memory polymers. The blends in accordance with the present invention provide shape memory properties at contents of shape memory polymers as low as 60 wt% or lower, preferably 50 wt% or lower, more preferably 30 wt% or lower and in some embodiments even 25 wt% or lower. The above weight percentage is based on the overall composition of the polymer blend, i.e. the sum of polymeric components present. The lower limit for the content of the shape memory polymer in the blends in accordance with the present invention is about 1%, in other embodiments 5% or even 10% or 15%.

The blends in accordance with the present invention may comprise additional components, such as fillers, processing, additives, colorants, stabilizers etc., as usual in the art of polymer processing, as long as these additional components do not affect the shape memory properties to an extent that no shape memory properties can be obtained.

The shape memory polymers to be used in accordance with the present invention are in particular shape memory polymers as disclosed in the two international publications WO 99/42528 and WO 99/42147, incorporated herein by reference. Typical examples thereof are shape memory polymers showing a shape memory effect initiated by a change in temperature. It is however, in the context of the present invention, possible to use shape memory polymers having a shape memory effect initiated by another stimulus, for example light. Suitable examples thereof are disclosed in the international publication WO, incorporated herein by reference. Other suitable examples are illustrated in the two other publications mentioned above, i.e. WO 99/42528 and WO 99/42147, incorporated herein by reference. Preferred embodiments of shape memory polymers which can be employed in the blends in accordance with the present invention, alone or in any desired combination, are in particular copolyester urethanes comprising at least one hard segment and at least one soft segment bound by urethane groups, wherein suitable building blocks for the segments are diol macromers comprising alkylene glycol units, such as ethylene glycol units, propylene glycol units or butylene glycol units, as well as diol macromers comprising ester groups, derived from caprolactone, lactic acid, pentadecalactone or any given combination thereof. The shape memory polymers to be used in accordance with the present invention preferably are thermoplastic materials. It is, however, also possible to employ shape memory polymers which are thermoset materials, for example thermosets derived from building blocks comprising any of the above-mentioned units, wherein the starting macromers are not diols but macromers with a suitable functionalization so that network polymers can be obtained. One in particular preferred class of starting materials of this type are dimethacrylates of the blocks mentioned above in connection with the thermoplastic shape memory polymers. Such starting materials can then be polymerized, optionally in the presence of additional monomers, such as acryl monomers in order to provide a thermoset shape memory polymer.

Preferred embodiments of the present invention are blends comprising as shape memory polymer thermoplastic shape memory polymers, preferably shape memory polymers derived from caprolactone, lactic acid, pentadecalactone and alkylene glycol units, alone or in any given combination.

Preferred shape memory polymers are in particular block polymers comprising blocks derived form oligomers, such as caprolactone, pentadecalactone, etc as mentioned above, connected by urethane linkages, preferably obtainable by polyaddition reactions using oligomers as exemplified above in diol form, and suitable diisocyanates, in particular 2,2,4- and 4,4,2-trimethylhexanediisocyanate (TMDI). The oligomers preferably have a MW of from 1000 to 20000 g/mol, more preferably 2000 to 15000 g/mol and in particular 3000 to 10000 g/mol. The resulting polymers preferably have a MW of from 50000 to 250000 g/mol, more preferably 80000 to 150000 g/mol. Preferably these shape memory polymers to be employed in the present invention comprise one or two types of blocks as exemplified above.

Suitable combinations of shape memory polymers and thermoplastic polymers may be selected on the basis of known properties, such as miscibility. It is in particular preferred when the shape memory polymer comprises a block derived from units (such as caprolactone, pentadecalactone etc) which are known to be compatible with the thermoplastic polymer or which even are known to serve a particular purpose. Polycaprolactone for example is a known polymeric plasticizer for PVC. Accordingly blends of PVC with shape memory polymers comprising blocks derived from caprolactone are preferred, since the known compatability results in good blending properties and suitable shape memory properties/functionalities. Other suitable examples of blends may be envisaged by the skilled person on the basis of the selection rule outlined above. Blends as exemplified above show a transition temperature based on a mixed phase of the thermoplastic polymer and the shape memory polymer, for example based on a T_{g} of the thermoplastic polymer and the transition temperature of the shape memory polymer.

Another example shown below, i.e. the blend of HDPE and a pentadecalactone derived shape memory polymer shows a transition temperature corresponding to a temperature value between the melting temperatures of the single components. In the example shown the transition temperature of about 95°C lies between the tₘ of HDPE (about 110°C) and the tₘ of the shape memory polymer (about 88°C).

The at least one thermoplastic polymer to be blended with the at least one shape memory polymer preferably is an olefin polymer or a vinyl polymer. In particular preferred embodiments of these thermoplastic polymers are polyethylenes, polypropylenes, copolymers of ethylene and propylene and other α-olefins, polyvinyl chloride, polystyrene, copolymers of styrene and diene monomers, such as isoprene or butadiene, hydrogenated derivatives thereof, as well as any given mixture of the aforementioned thermoplastic polymers. In particular preferred are polyethylenes, in particular HDPE, and polyvinyl chloride.

The use of such blends allows to obtain shape memory materials wherein the content of the shape memory polymer, based on the total of the polymer components present, can be reduced to values as low as 50% or lower, or even 25% or lower. It previously has not been deemed to be possible to obtain shape memory materials with blends comprising such low contents of shape memory polymers, since, as outlined above, it was the prevalent opinion in the art that shape memory properties are bulk properties of a given material, so that any dilution of this material would inevitably lead to a loss of the desired shape memory properties.

Suitable methods for preparing the blends in accordance with the present invention are in particular mixing processes, which blend the polymer components in the melt phase. Suitable devices therefore are in particular the known devices for polymer processing, such as Banbury mixers or extruders. In particular, extruders are suitable for preparing the blends in accordance with the present invention, since the use of extruders allows the preparation of homogenous mixtures, due to the possibility to control the temperature and shear condition within the extruder. Furthermore, it is easily possible to add additional components, such as the above listed additives.

An alternative to melt blending is a methodology based on solution techniques. Dissolved mixtures of polymers may be prepared from which the blend in accordance with the present invention may be obtained by evaporation of the solvent or precipitation, for example by reducing the solubility of the dissolved polymers by means of temperature change or by means of addition of a non-solvent or poor solvent. These methods are more complicated than melt blending, however, the obtained blends usually show a better, i.e. more even distribution of the polymer components.

A further possibility to prepare the blends in accordance with the present invention is the possibility to polymerize the thermoplastic polymer which is not the shape memory polymer in the presence of the shape memory polymer, in particular with respect to blends comprising polyolefins or styrene polymers. In this respect, the skilled person can revert to the methodologies as developed for the preparation of impact-modified polymers, during which polymers are prepared in the presence of one already prepared polymer (typically the rubber phase). The resulting blends can be described as reactor alloys or reactor blends since the blend occurs during the polymerization of one of the components. One advantage of such a process is the possibility to control the type of blend, for example by controlling the particle size and particle shape of the shape memory polymer present during the polymerization of the thermoplastic polymer.

It is furthermore also possible to prepare blends or mixtures of a thermoplastic polymer with a precursor for a shape memory polymer. This blend or mixture is subsequently subjected to a suitable processing in order to effect the final synthesis of the shape memory polymer. This approach is in particular applicable for shape memory thermoset polymers, where the final reaction leading to the thermoset shape memory polymer is carried out in the presence of the at least one thermoplastic polymer so that an intimate blend is obtained.

Suitable fields of application for the blends in accordance with the present invention are the medicinal field and household products. The use of thermoplastic polymers in a blend with a shape memory polymer allows to reduce drastically the costs for shape memory materials, so that a broader range of application is available. At the same time, the addition of the thermoplastic polymer, which is not a shape memory polymer, does not necessarily sacrifice the desired properties, such as biocompatibility, important for medicinal applications. Furthermore, it is possible to tailor the mechanical as well as the thermal properties of the blends by appropriately selecting the blend components. Blends in accordance with the present invention, in particular blends using polyethylenes, in particular HDPE, enable the provision of shape memory materials having high transition temperatures, for example transition temperatures as high as 100°C. This enables the use of shape memory materials in applications wherein the material is subjected to temperatures far exceeding body temperature, i.e. temperatures as high as 50°C to 70°C, without running the danger of inadvertedly triggering the shape memory effect. This effect can then be triggered with an appropriate external stimulus by raising the temperature to the above-mentioned exemplary transition temperature of about 100°C, in order to safely and securely trigger the shape memory effect.

These materials accordingly could be used for polymer parts of devices where it is desired to enable an easy disassembly after use, for example for recycling purposes. Parts prepared from blends in accordance with the present invention may be used for preparing parts used for holding together other parts of a device, for example casings. The blends in accordance with the present invention, due to their high content of typical thermoplastic polymers, may easily be molded using standard equipment, in order to provide such parts. While securing for example the integrity of a casing by holding together the single parts of such a casing, the shape memory blend of the present invention is present in the temporary shape. Since the usual temperatures during the lifetime of such a casing (for example for a computer or household devices) do not approach the high transition temperatures identified above, the part formed from the blend in accordance with the present invention remains safely and unchanged. After the lifetime of the product the temperature is raised in order to exceed the transition temperature, so that the shape memory effect is initiated. This leads to a change in shape of the molded blend, transferring the blend to its permanent shape. This permanent shape has previously be selected so that this shape memory effect loosens the mechanical force exerted by the molded part of the blend of the present invention so that it is possible to separate the parts of the product, for example the casing, secured previously by the molded part prepared from the blend. This greatly facilitates the disassembly of such products making material recovery during recycling much easier.

The following examples illustrate the invention.

### Examples

A blend of HDPE (PE Plus; Elenac) with homopoly(pentadecalactone)polymer as thermoplastic shape memory polymer (semi-crystalline, MW 100000 g/mol, Tₘ = 88°C) was prepared at a weight ratio of 50:50. The shape memory polymer was prepared by polyaddition of oligo-pentadecalactone diol (MW 3000) with 2,2,4- and 4,4,2-trimethylhexanediisocyanate (TMDI) and the blend was prepared using a minicompounder Minilab of the company Thermohaake. The obtained blend shows a transition temperature of about 95°C evidenced by DSC analysis as well as mechanical testing. The material of this example shows a shape fixity of 96% and a recovery of 55%, which are acceptable values for shape memory materials.

Similar samples were also prepared using a polyvinyl chloride as thermoplastic material in combination with a poly(pentadecalactone)-co-poly(caprolactone) (semi-crystalline, MW 80000 g/mol, Tₘ₁ (soft/switching segment) = 55°C, Tₘ₂ (hard segment) = 88°C) as shape memory polymer. The shape memory polymer was prepared by polyaddition of oligo-pentadecalactone diol (MW 3000) and oligo-caprolactone diol (MW 10000) at a weight ratio of 40:60 with 2,2,4- and 4,4,2-trimethylhexanediisocyanate (TMDI). The blends were prepared at weight ratios of 50:50 and 75:25. These blends show a transition temperature of about 45°C. Shape fixity and shape recovery are about 95% and 82%, and about 97% and 76%, respectively. These are again satisfactory values for shape memory materials.

## Claims

1. Shape memory blend, comprising at least one shape memory polymer and at least one thermoplastic polymer.

2. Blend in accordance with claim 1, wherein the shape memory polymer comprises at least one hard segment which has a transition temperature between -40°C and 270°C and at least one soft segment which has a transition temperature at least 10°C lower than that of the hard segment, linked to at least one hard segment.

3. Blend in accordance with any of claims 1 or 2, wherein the shape memory polymer comprises at least one hard segment having a transition temperature between - 40°C and 270°C, at least one first soft segment which has a transition temperature at least 10°C lower than that of the hard segment, linked to at least one hard segment, and at least one second soft segment, linked to at least one of the hard segment or the first soft segment, which has a transition temperature at least 10°C less than the transition temperature of the first soft segment.

4. Blend in accordance with any of claims 1, 2 or 3, wherein the shape memory polymer is present in an amount of 50% or less, based on the weight of the polymer components of the blend.

5. Blend in accordance with claim 4, wherein the shape memory polymer is present in an amount of 25% or less, based on the polymer components of the blend.

6. Blend in accordance with any of claims 1, 2, 3, 4 or 5, wherein the thermoplastic polymer is selected from polyolefins and vinyl polymers.

7. Blend in accordance with any one of claims 1, 2, 3, 4, 5 or 6, wherein the thermoplastic polymer is HDPE or PVC.

8. Blend in accordance with any of the preceding claims, wherein the shape memory polymer is a thermoplastic shape memory polymer.

9. Blend in accordance with any of the preceding claims, wherein the shape memory polymer is a shape memory polymer based on ester segments derived from pentadecalactone and/or caprolactone.

10. Blend in accordance with any of the preceding claims, wherein the blend shows a transition temperature for the shape memory effect of above 40°C.

11. Method of preparing a blend according to any of claims 1 to 10, comprising mixing the at least one shape memory polymer and the at least one thermoplastic polymer in the melt.

12. Method of preparing a blend according to any of claims 1 to 10, comprising polymerising a thermoplastic polymer in the presence of at least one shape memory polymer.

13. Method of preparing a blend according to any of claims 1 to 10, comprising mixing a precursor of the at least one shape memory polymer with the at least one thermoplastic polymer and subjecting the obtained mixture to a suitable processing in order to form the shape memory polymer.

14. Use of the blend according to any of claims 1 to 10 for the preparation of medicinal products, household products, parts of vehicles or telecommunication or computer devices.

15. The use according to claim 14, wherein the product prepared from the blend in accordance with any of claims 1 to 10 is a connecting part, which secures and holds together other parts of any given product while being in the temporary shape, so that after transfer to the permanent shape the given product may be disassembled since the part in the permanent shape does no longer secure and hold together the other parts of the given product.
